# DEMANDE DE BREVET EUROPEEN

(11) **EP 1 341 018 A1**
(43) Date de publication de la demande: **03.09.2003**
(21) Numéro de dépôt: 03354016.2
(22) Date de dépôt: 19.02.2003
(51) Int. Cl.: G02B 6/42, H01L 33/00, G01N 21/62

(54) **Dispositif de couplage optique, sonde optique et dispositif de communication comportant un tel dispositif de couplage**

(30) Priorité: 28.02.2002 FR 0202511
(71) Demandeur: Schneider Electric Industries SAS, 92500 Rueil-Malmaison (FR)
(72) Inventeur: Lovato, Jean Louis, Schneider Electric Ind. SAS, 38050 Grenoble cedex 09 (FR); Moussanet, Roland, Schneider Electric Ind. SA, 38050 Grenoble cedex 09 (FR); Minier, Vincent, Schneider Electric Ind. SA, 38050 Grenoble cedex 09 (FR); Trouillon, Michel, Schneider Electric Ind. SA, 38050 Grenoble cedex 09 (FR)
(74) Mandataire: Tripodi, Paul

(57) **Abrégé**

Le dispositif de couplage optique comporte des moyens d'émission (1) optique disposés dans un matériau d'enrobage (13) pour émettre un premier signal lumineux (2) vers un conduit optique (12), et des moyens de réception optique (4) séparés des moyens d'émission (1) pour recevoir un second signal lumineux (5). Pour améliorer le rendement et simplifier la fabrication, les moyens de réception optique reçoivent le second signal lumineux à travers ledit matériau d'enrobage. Une sonde optique comporte ledit dispositif de couplage optique, un capteur optique (8), et un conduit optique reliant le dispositif de couplage et le capteur pour émettre un premier signal lumineux (2) vers le capteur et pour renvoyer un second signal lumineux vers le dispositif de couplage. Le dispositif de communication comporte deux stations (28, 29) reliées par un conduit optique (12) et comportant des dispositifs de couplage (14A, 14B).

## Description

### DOMAINE TECHNIQUE

L'invention concerne un dispositif de couplage optique comportant des moyens d'émission optique disposés dans un matériau d'enrobage pour émettre un premier signal lumineux vers un conduit optique, et des moyens de réception optique séparés des moyens d'émission pour recevoir un second signal lumineux.

L'invention concerne aussi une sonde optique comportant un dispositif de couplage optique, un capteur optique, et un conduit optique reliant le dispositif de couplage et le capteur pour émettre un premier signal lumineux vers le capteur et pour renvoyer un second signal lumineux vers le dispositif de couplage.

L'invention concerne aussi un dispositif de communication comportant une première station et une seconde station reliées par un conduit optique et destinées à émettre et recevoir des informations ou des données par des signaux lumineux circulant dans ledit conduit optique.

### ETAT DE LA TECHNIQUE

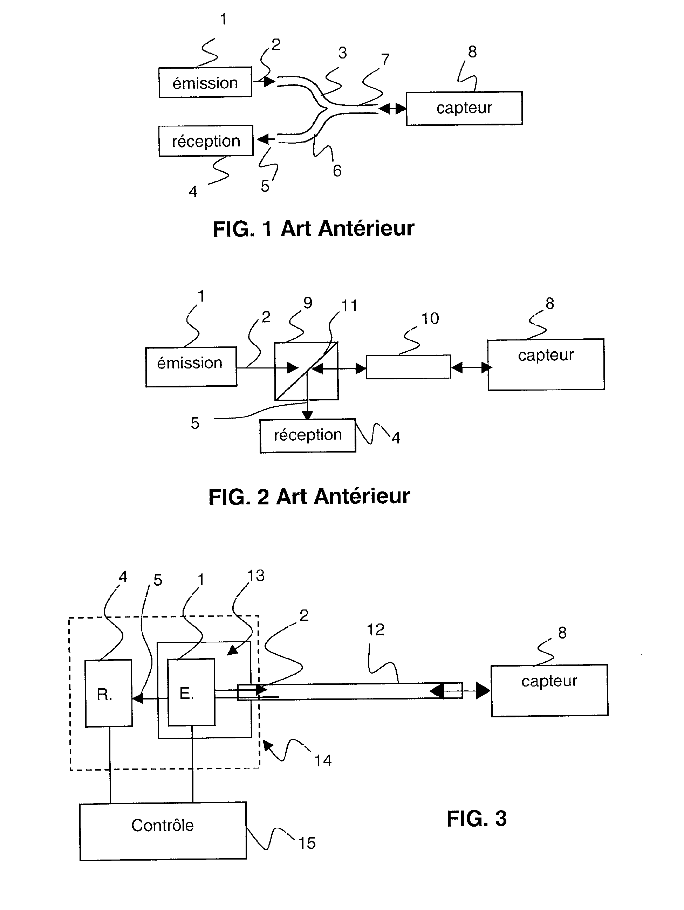

Un dispositif de couplage de l'état de la technique, utilisé notamment dans des sondes, est représenté sur la figure 1. Il comporte des moyens d'émission 1 pour émettre un premier signal lumineux 2 vers une première fibre optique 3, et des moyens de réception 4 pour recevoir un second signal lumineux 5 depuis une seconde fibre optique 6. Les deux fibres peuvent être groupées en un seul conduit 7 dirigé par exemple vers un capteur 8 réagissant aux signaux lumineux.

Un autre dispositif de couplage de l'état de la technique est représenté sur la figure 2. Il comporte des moyens d'émission 1 pour émettre un premier signal lumineux 2 vers un séparateur optique 9 et des moyens de réception 4 pour recevoir un second signal lumineux 5 depuis le séparateur optique 9. Les signaux optiques 2 et 5 sont conduits par une fibre ou un conduit optique 10 dirigé vers un capteur 8. Le séparateur 9 comporte généralement une lame semi-réfléchissante 11 permettant de laisser passer le premier signal lumineux venant des moyens d'émission et de réfléchir le second lumineux vers les moyens de réception. Ainsi, le premier signal lumineux, est émis par les moyens d'émission 1, traverse le séparateur 9 en passant de l'arrière de la lame 11 vers l'avant, puis passe par le conduit 10 jusqu'au capteur 8. En retour un second signal 5 est renvoyé par le capteur 8 vers le conduit 10 et le séparateur 9, puis le signal 5 est réfléchi par la face avant de la lame 11 vers les moyens de réception 4.

Une sonde comportant de tels dispositifs de couplage optique est décrite dans la demande de brevet EP0940655.

Les dispositifs de couplage optique de l'état de l'art nécessite de doubler les trajets des signaux lumineux soit par un couplage des fibres optiques soit en utilisant un séparateur optique. Ces solutions sont souvent difficiles à mettre en oeuvre de manière efficace. De plus, les rendements optiques des chaînes de transmission des signaux lumineux sont très faibles.

Il existe des composants électro-optiques comportant dans un même boîtier des moyens d'émission et des moyens de réception, cependant les longueurs d'ondes de fonctionnement de ces composants sont souvent incompatibles avec des utilisations dans des sondes ou avec des capteurs. Le choix des longueurs d'onde des moyens d'émission et des moyens de réception n'est pas possible sur des composants déjà associés. De plus, ces composants spécifiques ont de faibles rendements dus notamment à la dispersion des faisceaux optiques en sortie des fibres. Ils nécessitent aussi un positionnement précis des fibres et parfois l'utilisation de lentilles optiques pour diriger les faisceaux vers les composants électro-optiques.

### EXPOSE DE L'INVENTION

L'invention a pour but un dispositif de couplage optique permettant un rendement amélioré et d'évitant les problèmes de fabrication des dispositifs de l'état de la technique. L'invention a aussi pour but une sonde et un dispositif de communication comportant un tel dispositif de couplage.

Dans un dispositif de couplage selon l'invention, les moyens de réception optique sont disposés de manière à recevoir le second signal lumineux depuis ledit conduit optique à travers ledit matériau d'enrobage des moyens d'émission optique.

Dans un mode de réalisation préférentiel, les moyens de réception optique, les moyens d'émission optique, et une entrée dudit conduit optique sont sensiblement alignés.

De préférence, le dispositif de couplage comporte des moyens de contrôle pour contrôler les moyens d'émission optique et les moyens de réception optique de manière alternée.

Avantageusement, les moyens d'émission optique sont sensiblement transparents à la longueur d'onde du second signal lumineux, les moyens de réception optique étant disposés pour recevoir le second signal lumineux à travers ledit matériau d'enrobage et à travers lesdits moyens d'émission optique.

De préférence, les moyens d'émission optique et les moyens de réception optique sont enrobés dans un même matériau transparent aux longueurs d'ondes desdits moyens d'émission et desdits moyens de réception.

Dans un mode de réalisation préférentiel, le dispositif de couplage comporte un guide de lumière disposé entre le matériau d'enrobage et les moyens de réception optique pour conduire le second signal lumineux vers les moyens de réception optique.

Avantageusement, le guide de lumière est réalisé dans le même matériau que le matériau d'enrobage des moyens d'émission optique.

Dans un mode de réalisation préférentiel, le dispositif de couplage comporte un filtre optique disposé entre le matériau d'enrobage et les moyens de réception optique pour filtrer le second signal lumineux.

De préférence, les moyens d'émission optique sont disposés sur une première face d'un circuit imprimé et que les moyens de réception optique sont disposés sur une seconde face dudit circuit imprimé, ledit circuit imprimé comportant une ouverture entre les moyens d'émission optique et les moyens de réception optique.

De préférence, les moyens d'émission optique et les moyens de réception optique fonctionnent par une modulation en fréquence du premier signal optique et une démodulation en fréquence du second signal optique.

Dans un mode de réalisation préférentiel, le dispositif de couplage comporte des moyens de filtrage électronique connectés entre les moyens de réception optique et les moyens de contrôle pour extraire un signal variable d'un signal porteur.

Avantageusement, les moyens de réception optique comportent au moins un récepteur et les moyens d'émission optique comportent au moins deux émetteurs commandés séquentiellement pour émettre au moins deux premiers signaux ayant deux longueurs d'onde différentes.

Par exemple, les au moins deux longueurs d'onde différentes permettent de détecter une couleur.

Dans une sonde optique selon l'invention comportant un dispositif de couplage optique, un capteur optique, et un conduit optique reliant le dispositif de couplage et le capteur pour émettre un premier signal lumineux vers le capteur et pour renvoyer un second signal lumineux vers le dispositif de couplage, le dispositif de couplage est un dispositif de couplage tel que défini ci-dessus émettant le premier signal lumineux vers le capteur et recevant le second signal lumineux depuis ledit capteur.

Avantageusement, le conduit optique est composé d'une seule fibre optique disposée entre le capteur et le dispositif de couplage pour conduire le premier signal lumineux et le second signal lumineux.

Dans un mode de réalisation préférentiel, le capteur est en matériau luminescent excité par le premier signal lumineux en sortie du conduit optique et renvoyant le second signal lumineux vers ledit conduit optique.

Par exemple, le capteur renvoie vers le conduit optique un second signal optique d'intensité décroissante après éclairement par le premier signal optique, le second signal ayant une longueur d'onde différente de la longueur d'onde du premier signal.

Avantageusement, le capteur renvoie vers le conduit optique un second signal optique modulé en fonction de déplacement ou de vibration dudit capteur.

Dans un mode de réalisation préférentiel, les moyens d'émission optique comportent au moins deux émetteurs pour envoyer séquentiellement vers le capteur au moins deux premiers signaux lumineux ayant deux longueurs d'onde différentes pour détecter une couleur ou un changement de couleur dudit capteur, ledit capteur renvoyant au moins deux seconds signaux lumineux en réponse audits deux premiers signaux lumineux.

Dans un dispositif de communication selon l'invention comportant une première station et une seconde station reliées par un conduit optique et destinées à émettre et recevoir des informations ou des données par des signaux lumineux circulant dans ledit conduit optique, la première station et la seconde station comportent au moins un dispositif de couplage tel que défini ci-dessus, un premier signal optique émis par des moyens d'émission d'un premier dispositif de couplage de la première station étant reçu comme un second signal optique par des moyens de réception d'un second dispositif de couplage de la seconde station, un premier signal optique émis par des moyens d'émission d'un second dispositif de couplage de la seconde station étant reçu comme un second signal optique par des moyens de réception d'un premier dispositif de couplage de la première station.

De préférence, un premier dispositif de couplage de la première station comporte un premier filtre optique disposé entre les moyens d'émission et les moyens de réception pour laisser passer un signal optique émis par des moyens d'émission d'un second dispositif de couplage et atténuer un signal optique ayant une longueur d'onde égale ou très proche de la longueur d'onde d'un signal émis par les moyens d'émission dudit premier dispositif de couplage.

De préférence, un second dispositif de couplage de la seconde station comporte un second filtre optique disposé entre les moyens d'émission et les moyens de réception pour laisser passer un signal optique émis par des moyens d'émission d'un premier dispositif de couplage et atténuer un signal optique ayant une longueur d'onde égale ou très proche de la longueur d'onde d'un signal émis par les moyens d'émission dudit second dispositif de couplage.

Avantageusement, au moins un dispositif de couplage comporte des moyens de modulation pour moduler dans une première bande de fréquence le premier signal lumineux destiné à être émis par les moyens d'émission dudit au moins dispositif de couplage et des moyens de détection pour détecter un second signal lumineux pouvant être reçu par les moyens de réception et modulé dans une seconde bande de fréquence.

Avantageusement, le conduit optique est une fibre optique reliée entre le premier dispositif de couplage et le second dispositif de couplage.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- les figures 1 et 2 représentent des dispositifs de couplage optiques de l'état de la technique;
- la figure 3 représente un dispositif de couplage selon un mode de réalisation de l'invention ;
- la figure 4 représente un dispositif de couplage selon un mode de réalisation de l'invention avec une diode émettrice et une diode réceptrice ;
- la figure 5 représente un dispositif de couplage selon un mode de réalisation de l'invention avec un montage sur un circuit imprimé ;
- la figure 6 représente un dispositif de couplage selon un mode de réalisation de l'invention avec un guide optique;
- la figure 7 représente un dispositif de couplage selon un mode de réalisation de l'invention avec un filtre optique ;
- la figure 8 représente des longueurs d'onde différentes des signaux optiques ;
- la figure 9 représente des allures des signaux optiques dans une sonde comportant un dispositif de couplage selon l'invention ;
- la figure 10 représente une sonde de détection de vibration comportant un dispositif de couplage selon un mode de réalisation de l'invention ;
- la figure 11 représente une sonde de détection de couleur comportant un dispositif de couplage selon un mode de réalisation de l'invention
- les figures 12 et 13 représentent des dispositifs de communication comportant des dispositifs de couplage selon des modes de réalisation de l'invention ;
- les figures 14A et 14B représentent des signaux dans des dispositifs de communication comportant des dispositifs de couplage selon des modes de réalisation de l'invention.

### DESCRIPTION DETAILLEE DE MODES DE REALISATION PREFERES

Dans un dispositif de couplage optique 14 selon un mode de réalisation de l'invention représenté sur la figure 3, les moyens d'émission comportent un émetteur 1 pour émettre un premier signal optique 2 ayant une première longueur d'onde vers un conduit lumineux 12, par exemple une fibre optique. Le signal 2 traverse un matériau d'enrobage 13 de l'émetteur qui permet de maintenir l'émetteur 1 et la fibre optique 12 en position optimale pour un bon rendement. Le matériau d'enrobage est de préférence un matériau solide et translucide large bande pouvant être facilement traversé par des signaux lumineux de couleur ou de longueurs d'onde différentes. Les moyens de réception comportent un récepteur 4 disposé de manière à recevoir à travers ledit matériau d'enrobage 13 un second signal 5 généralement de longueur d'onde différente du premier signal. Ce second signal 5 venant de la fibre 12 traverse le matériau 13 d'enrobage de l'émetteur et parvient au récepteur 4. Par exemple l'émetteur et le récepteur sont sensiblement alignés ou faiblement décalés pour un bon couplage avec la fibre optique.

Lorsque le dispositif est utilisé dans une sonde, le signal 2 est envoyé, par exemple, à un capteur 8 qui renvoie en retour un second signal 5 après avoir été excité par le signal 2. Le signal 5 revient à travers la fibre vers le matériau 13 d'enrobage de l'émetteur, traverse ledit matériau et est détecté par le récepteur 4 avec un bon rendement. Ce dispositif évite le doublage des fibres optique et l'utilisation de plaques semi-réfléchissantes.

Un circuit de contrôle 15 est connecté à l'émetteur 1 et au récepteur 2 pour contrôler l'émission et la réception des signaux lumineux. De préférence, l'émetteur 1 envoie le premier signal 2, et le récepteur 4 reçoit le second signal 5 de manière alternée.

Avantageusement, l'émetteur est choisi dans un composant sensiblement transparent à la longueur d'onde du second signal. Dans ce cas, le récepteur est disposé de manière à recevoir le second signal lumineux venant de la fibre optique à travers le matériau d'enrobage et à travers l'émetteur 1. Il est également possible de prévoir le récepteur entre l'arrivée de la fibre optique et l'émetteur. Le récepteur peut être alors transparent à la longueur d'onde du premier signal lumineux.

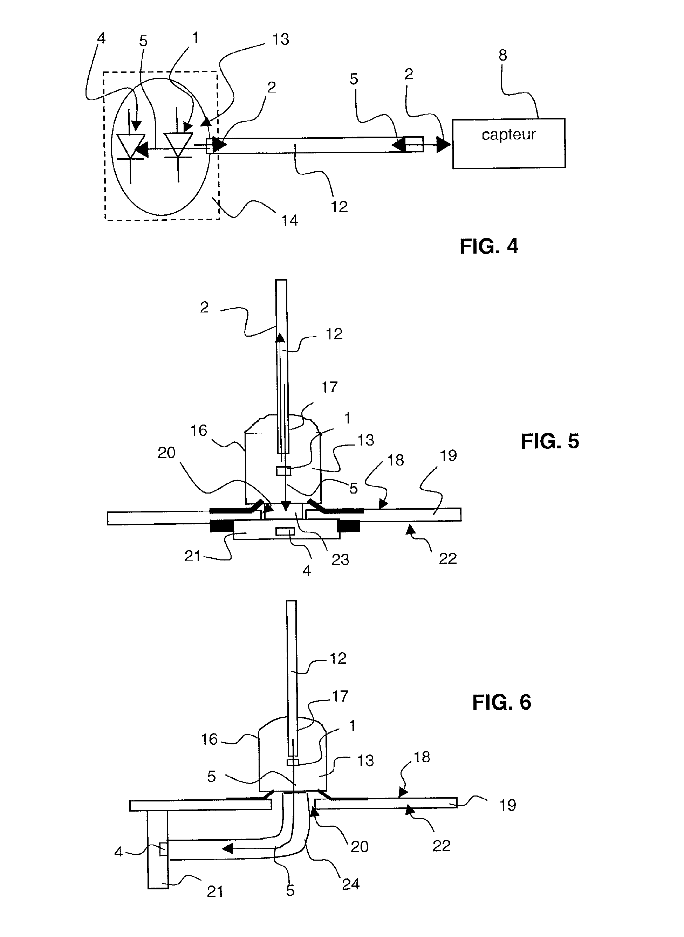

Sur la figure 4, l'émetteur 1 est représenté par une diode 1 émettrice et le récepteur 4 est représenté par une diode de détection de signaux lumineux. Ces deux composants peuvent être enrobés dans un même matériau 13 d'enrobage pour émettre et recevoir les signaux lumineux 2 et 5.

La figure 5 montre un mode de réalisation pratique d'un dispositif de couplage selon un mode de réalisation de l'invention. L'émetteur est un composant émetteur de signal lumineux tel qu'une diode électroluminescente 16 émettant dans une longueur d'onde prédéfinie. La partie émettrice 1 de la diode 16 est dans un boîtier translucide ou transparent faisant office de matériau d'enrobage 13. Le boîtier comporte un orifice 17 pour maintenir la fibre optique dans une position alignée et proche de la partie émettrice 1. La diode 16 est disposée sur une première face 18 d'un circuit imprimé 19 comportant une ouverture 20 à l'arrière de la diode à l'opposé de l'orifice 17. Le récepteur est un composant photo sensible 21 tel qu'une diode ou un photo transistor disposé sur une seconde face 22 du circuit imprimé 19 sensiblement dans l'alignement de la fibre optique et la diode 16.

Les composants 16 et 21 sont de préférence montés et soudés sur les faces du circuit imprimé comme des composants en montage en surface. Pour éviter que le second signal 5 se disperse dans l'air entre le composant 16 et le composant 21, un petit guide de lumière 23 peut être avantageusement disposé entre les deux composants 16 et 21. Le second signal 5 venant de la fibre optique 12 traverse le matériau 13 représenté par le boîtier de la diode 16, puis traverse le guide 23 et arrive sur le composant 21 comportant le récepteur 4.

Sur la figure 6, le composant 21 comportant le récepteur 4 est disposé de manière déportée. Un guide de lumière 24 est alors disposé entre l'arrière du composant 16 et le composant 21 pour conduire le second signal lumineux depuis le matériau 13 du boîtier du composant 16 jusqu'au composant 21. De préférence, les guides de lumière 23 et 24 sont réalisés avec le même matériau que le matériau d'enrobage 13.

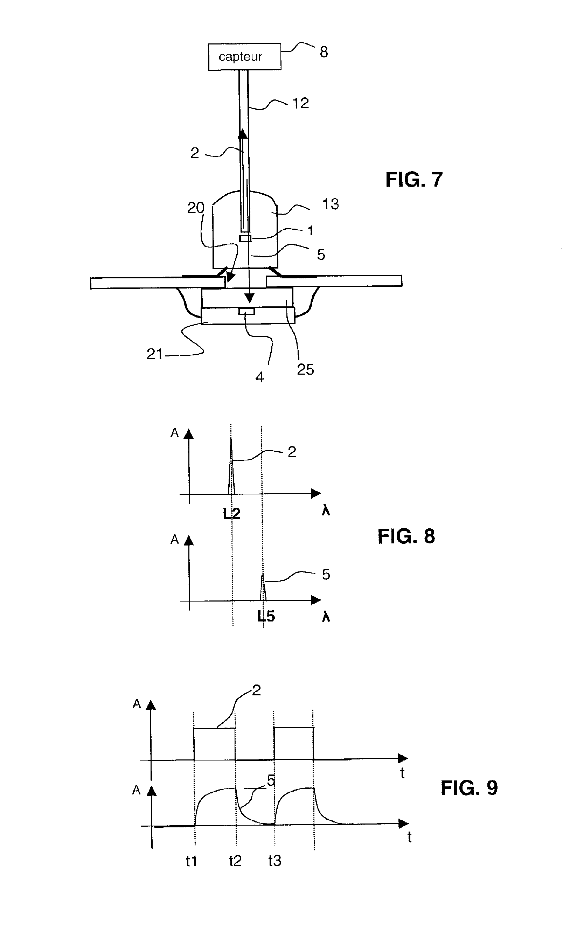

Sur la figure 7, un filtre optique 25 est disposé entre le matériau d'enrobage 13 et le composant 21 comportant le récepteur 4 pour laisser passer le second signal 5 et arrêter des signaux ayant d'autre longueur d'onde. Ainsi, le second signal revenant du capteur 8 est conduit par la fibre optique 12, traverse le matériau d'enrobage 13, traverse le filtre optique 25 et arrive sur le récepteur 4 du composant 21. Des rayons lumineux parasites ayant des longueurs d'ondes différentes de celle du second signal sont ainsi arrêtés ou atténués.

La figure 8 montre des courbes spectrales d'un premier signal 2 et d'un second signal 5. Par exemple, le premier signal 2 a une couleur ou une longueur d'onde principale L2 et une amplitude élevée, et le second signal 5 a une couleur ou une longueur d'onde principale L5 et une amplitude plus faible. Les longueurs d'ondes L2 et L5 sont différentes. Les longueurs d'ondes L2 et L5 peuvent être des fréquences centrales ou principales de signaux 2 et 5 modulés en amplitude ou en fréquence. Par exemple, les moyens d'émission peuvent fonctionner en modulation de fréquence et les moyens de réception peuvent fonctionner en démodulation de fréquence. La modulation et la démodulation peuvent se faire aussi avec un circuit de contrôle centralisé et/ou des circuits électroniques associés.

La figure 9 montre des courbes temporelles d'un premier signal 2 et d'un second signal 5. Par exemple, le premier signal 2 a une forme rectangulaire formant des créneaux où une partie haute représente la présence de lumière, entre des instants t1 et t2, et la partie basse représente une absence de lumière, entre l'instant t2 et un instant t3. Dans un capteur 8 réalisé en matériau luminescent ou fluorescent, le second signal 5 a une intensité qui augmente en présence du premier signal 2, et une intensité qui décroît lorsque le signal 2 passe à zéro ou à une valeur très basse. Dans un capteur de température où le capteur est par exemple du rubis ou de l'alexandrite, la partie décroissante du signal 5 est représentative de la valeur de la température. Ainsi, les moyens de contrôle commandent l'excitation du capteur entre les instants t1 et t2 par l'émission du signal 2, et activent la réception et l'acquisition et/ou la mesure du signal 5 pour déterminer une valeur de température, notamment entre les instants t2 et t3.

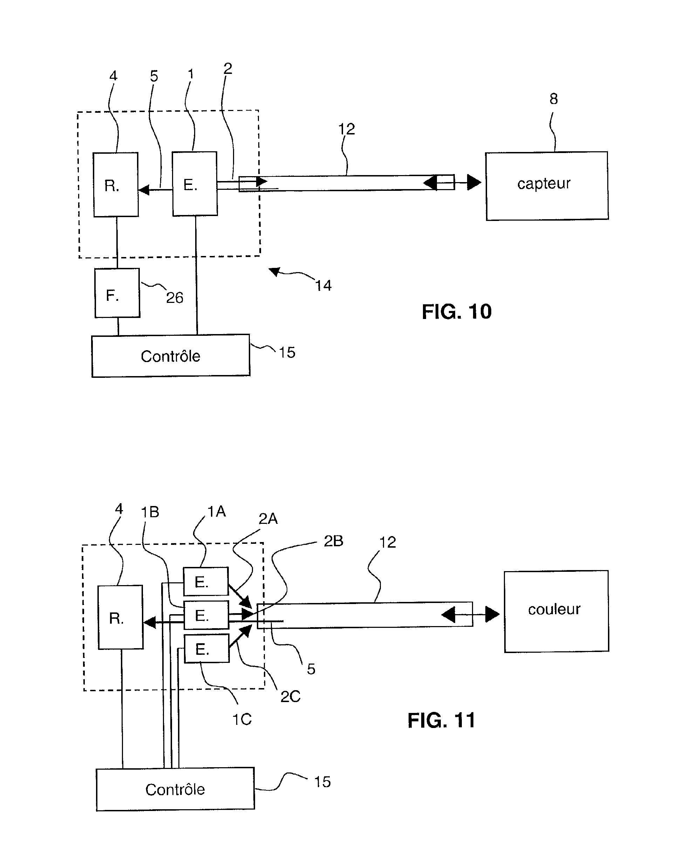

La figure 10 représente une sonde de détection de vibrations comportant un dispositif de couplage 14. Le capteur 8 permet alors de détecter des vibrations mécaniques, notamment des sons, des ultra sons, des pressions, ou des mouvements. Le dispositif de couplage optique émet un signal 2 vers le capteur et reçoit un second signal 5 vers le récepteur 4 modulé en fonction des vibrations détectées. Le capteur peut avoir la forme d'une membrane déformable ayant une face réfléchissante. Un filtre électronique 26 connecté entre le récepteur 4 et le circuit de contrôle 15 permet de laisser passer le signal utile représentatif des vibrations détectées et de réduire les autres signaux.

La figure 11 représente une sonde de détection de couleur comportant un dispositif de couplage selon un mode de réalisation particulier. Pour détecter une couleur, les moyens d'émission comportent au moins deux émetteurs pour émettre deux premiers signaux ayant deux longueurs d'onde différentes. Les émetteurs sont de préférence commandés séquentiellement. Sur le schéma de la figure 11, les moyens d'émission comportent trois émetteurs 1A, 1B et 1C pour émettre séquentiellement trois premiers signaux respectivement 2A, 2B et 2C vers le conduit ou la fibre optique 12. En retour, le capteur renvoie séquentiellement sur un second signal 5 des réponses dudit capteur ou un signal représentatif de la couleur détectée. Le capteur peut être un objet sur lequel une couleur doit être détectée ou déterminée. Une analyse par un circuit de contrôle 15 de séquences d'information du signal 5 permet de déterminer une couleur.

Les trois émetteurs peuvent être incorporés dans un même composant électronique par exemple intégrant des diodes électroluminescentes de couleur rouge, vert et bleu. Il est également possible de détecter une couleur en ayant un seul émetteur émettant par exemple de la lumière blanche et d'avoir trois récepteurs sensibles à des longueurs d'onde différentes ou comportant chacun un filtre différent pour déterminer la couleur du capteur.

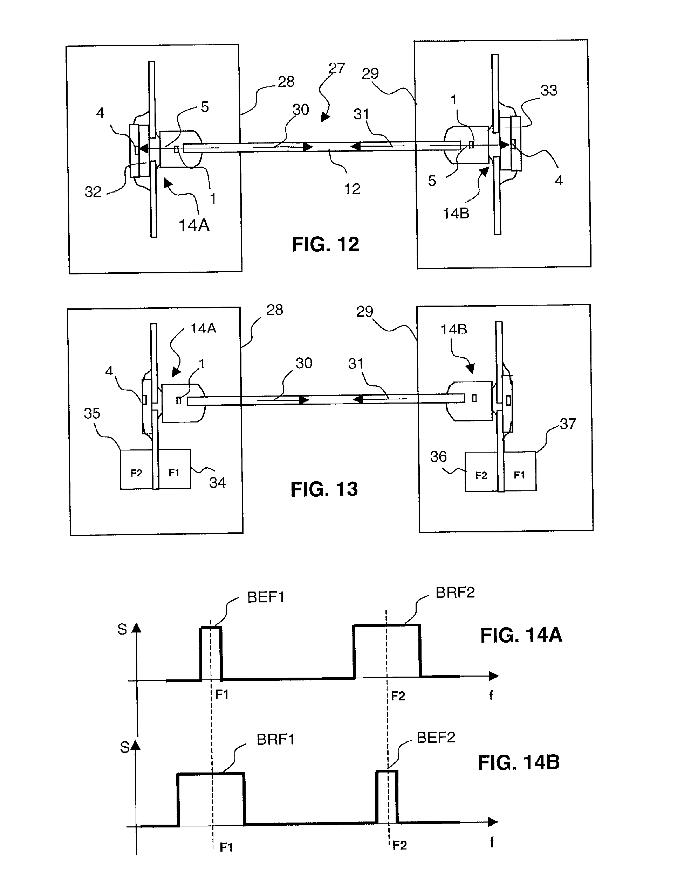

La figure 12 montre un dispositif de communication 27 comportant une première station 28 et une seconde station 29 reliées par un conduit optique 12 et destinées à émettre et recevoir des informations ou des données par des signaux lumineux 30 et 31 circulant dans ledit conduit optique. La première station 28 et la seconde station 29 comportent au moins un dispositif de couplage tel que défini dans des modes de réalisation décrits ci-dessus. Un premier signal optique 30 émis par des moyens d'émission 1 d'un premier dispositif de couplage 14A de la première station 28 est reçu comme un second signal 5 optique par des moyens de réception 4 d'un dispositif de couplage 14B de la seconde station 29. Un premier signal optique 31 émis par des moyens d'émission d'un second dispositif de couplage 14B de la seconde station 29 est reçu comme un second signal 5 optique par des moyens de réception 4 d'un dispositif de couplage 14A de la première station 28.

Pour communiquer de manière efficace, le premier dispositif de couplage 14A de la première station 28 comporte un premier filtre optique 32 disposé entre les moyens d'émission 1 et les moyens de réception 4 pour laisser passer un signal optique émis par des moyens d'émission 1 d'un second dispositif de couplage 14B et atténuer un signal optique ayant une longueur d'onde égale ou très proche de la longueur d'onde d'un signal émis par les moyens d'émission du premier dispositif de couplage 14A.

De la même manière, le second dispositif de couplage 14B de la seconde station 29 comporte un second filtre optique 33 disposé entre les moyens d'émission 1 et les moyens de réception 4 pour laisser passer un signal optique émis par des moyens d'émission d'un premier dispositif 14A de couplage et atténuer un signal optique ayant une longueur d'onde égale ou très proche de la longueur d'onde d'un signal émis par les moyens d'émission du second dispositif de couplage 14B.

Par exemple, les premiers moyens d'émission du premier dispositif de couplage 14A peuvent être une diode électroluminescente émettant dans le vert et les premiers moyens d'émission du second dispositif de couplage 14B peuvent être une diode électroluminescente émettant dans le rouge. Ainsi, le premier filtre optique 32 bloque les rayons lumineux verts et laisse passer les rayons lumineux rouges alors que le second filtre optique 33 bloque les rayons lumineux rouges et laisse passer les rayons lumineux verts. De préférence, les diodes électroluminescentes émettent dans le rouge ou le vert mais comportent un boîtier plastique transparent ou incolore.

La figure 13 montre des dispositifs de communication pouvant aussi fonctionner sans filtres optiques. Dans ce cas, par exemple un dispositif de couplage 14A comporte un circuit de modulation 34 pour moduler dans une première bande de fréquence F1 le premier signal lumineux 30 destiné à être émis par des moyens d'émission 1 dudit premier dispositif de couplage 14A et des moyens de détection 35 pour détecter un second signal lumineux pouvant être reçu par les moyens de réception 4 et modulé dans une seconde bande de fréquence F2. Le second dispositif de couplage 14B comporte un circuit de modulation 36 pour moduler dans la seconde bande de fréquence F2 le second signal lumineux 31 destiné à être émis par des moyens d'émission 1 dudit second dispositif de couplage 14B et des moyens de détection 37 pour détecter un premier signal lumineux 30 pouvant être reçu par les moyens de réception 4 et modulé dans la première bande de fréquence F1.

Les figures 14A et 14B illustrent des bandes de fonctionnement en fréquence des moyens d'émission, de réception et de détection, et des circuits de modulation ou de démodulation. Sur la figure 14A, le premier dispositif de couplage 14A émet dans une bande fréquence BEF1 calée sur la fréquence F1, et reçoit sur une bande de fréquence BRF2 calée sur la fréquence F2. Sur la figure 14B, le second dispositif de couplage 14B émet dans une bande fréquence BEF2 calée sur la fréquence F2, et reçoit sur une bande de fréquence BRF1 calée sur la fréquence F1. Avantageusement, les bandes de fréquence à la réception sont plus larges que les bandes de fréquences à l'émission. Les fréquences sont suffisamment éloignées pour ne pas interférer en cas de communication bidirectionnelle.

Le conduit optique est de préférence une fibre optique reliée entre le premier dispositif de couplage et le second dispositif de couplage mais d'autres conduits ou guides peuvent être utilisés.

Les moyens de réceptions peuvent être notamment des photodiodes, des phototransistors ou des photo résistances. Les moyens d'émission et de réception peuvent être, par exemple, dans des boîtiers plastiques ou métalliques localement ouverts ou transparents. Les boîtiers des composants formant le matériau d'enrobage des moyens d'émission peuvent comporter des parois réfléchissantes pour améliorer le rendement de l'émission et de la réception.

## Revendications

1. Dispositif de couplage optique comportant des moyens d'émission (1) optique disposés dans un matériau d'enrobage (13) pour émettre un premier signal lumineux (2) vers un conduit optique (10, 12), et des moyens de réception optique (4) séparés des moyens d'émission (1) pour recevoir un second signal lumineux (5),
dispositif **caractérisé en ce que** les moyens de réception optique (4) sont disposés de manière à recevoir le second signal lumineux (5) depuis ledit conduit optique (10, 12) à travers ledit matériau d'enrobage (13) des moyens d'émission optique (1).

2. Dispositif de couplage selon la revendication 1 **caractérisé en ce que** les moyens de réception optique (4), les moyens d'émission optique (2), et une entrée (17) dudit conduit optique sont sensiblement alignés.

3. Dispositif de couplage selon l'une des revendications 1 ou 2 **caractérisé en ce qu'**il comporte des moyens de contrôle (15) pour contrôler les moyens d'émission optique (1) et les moyens de réception optique (4) de manière alternée.

4. Dispositif de couplage selon l'une quelconque des revendications 1 à 3 **caractérisé en ce que** les moyens d'émission optique (1) sont sensiblement transparents à la longueur d'onde du second signal lumineux (5), les moyens de réception optique (4) étant disposés pour recevoir le second signal lumineux (5) à travers ledit matériau d'enrobage (13) et à travers lesdits moyens d'émission optique (1).

5. Dispositif de couplage selon l'une quelconque des revendications 1 à 4 **caractérisé en ce que** les moyens d'émission optique (1) et les moyens de réception optique (4) sont enrobés dans un même matériau (13) transparent aux longueurs d'ondes desdits moyens d'émission et desdits moyens de réception.

6. Dispositif de couplage selon l'une quelconque des revendications 1 à 5 **caractérisé en ce qu'**il comporte un guide de lumière (23, 24) disposé entre le matériau d'enrobage (13) et les moyens de réception optique (4) pour conduire le second signal lumineux (5) vers les moyens de réception optique (4).

7. Dispositif de couplage selon la revendication 6 **caractérisé en ce que** le guide de lumière (23, 24) est réalisé dans le même matériau que le matériau d'enrobage (13) des moyens d'émission optique (1).

8. Dispositif de couplage selon l'une quelconque des revendications 1 à 7 **caractérisé en ce qu'**il comporte un filtre optique (25, 32, 33) disposé entre le matériau d'enrobage (13) et les moyens de réception optique (4) pour filtrer le second signal lumineux (5).

9. Dispositif de couplage selon l'une quelconque des revendications 1 à 8 **caractérisé en ce que** les moyens d'émission optique (1) sont disposés sur une première face (18) d'un circuit imprimé (19) et que les moyens de réception optique (4) sont disposés sur une seconde face (22) dudit circuit imprimé, ledit circuit imprimé comportant une ouverture (20) entre les moyens d'émission optique et les moyens de réception optique.

10. Dispositif de couplage selon l'une quelconque des revendications 1 à 9 **caractérisé en ce que** les moyens d'émission optique (1) et les moyens de réception optique (4) fonctionnent par une modulation en fréquence du premier signal optique (2) et une démodulation en fréquence du second signal optique (5).

11. Dispositif de couplage selon l'une quelconque des revendications 1 à 10 **caractérisé en ce qu'**il comporte des moyens de filtrage électronique (26) connectés entre les moyens de réception optique (4) et les moyens de contrôle (15) pour extraire un signal variable d'un signal porteur.

12. Dispositif de couplage selon l'une quelconque des revendications 1 à 11 **caractérisé en ce que** les moyens de réception optique (4) comportent au moins un récepteur et les moyens d'émission optique (1) comportent au moins deux émetteurs (1A, 1B, 1C) commandés séquentiellement pour émettre au moins deux premiers signaux (2A, 2B, 2C) ayant deux longueurs d'onde différentes.

13. Dispositif de couplage selon la revendication 12 **caractérisé en ce que** les au moins deux longueurs d'onde différentes permettent de détecter une couleur.

14. Sonde optique comportant un dispositif de couplage optique, un capteur optique (8), et un conduit optique (12) reliant le dispositif de couplage et le capteur pour émettre un premier signal lumineux (2) vers le capteur et pour renvoyer un second signal lumineux (5) vers le dispositif de couplage, **caractérisé en ce que** le dispositif de couplage est un dispositif de couplage (14) selon l'une quelconque des revendications 1 à 13 émettant le premier signal lumineux (2) vers le capteur (8) et recevant le second signal lumineux (5) depuis ledit capteur (8).

15. Sonde optique selon la revendication 14 **caractérisé en ce que** le conduit optique (12) est composé d'une seule fibre optique disposée entre le capteur (8) et le dispositif de couplage (14) pour conduire le premier signal lumineux (2) et le second signal lumineux (5).

16. Sonde optique selon l'une des revendications 14 ou 15 **caractérisé en ce que** le capteur (8) est en matériau luminescent excité par le premier signal lumineux (2) en sortie du conduit optique (12) et renvoyant le second signal lumineux (5) vers ledit conduit optique (12).

17. Sonde optique selon l'une quelconque des revendications 14 à 16 **caractérisé en ce que** le capteur (8) renvoie vers le conduit optique un second signal optique (5) d'intensité décroissante après éclairement par le premier signal optique (2), le second signal ayant une longueur d'onde différente de la longueur d'onde du premier signal.

18. Sonde optique selon l'une quelconque des revendications 14 à 16 **caractérisé en ce que** le capteur (8) renvoie vers le conduit optique (12) un second signal optique (5) modulé en fonction de déplacement ou de vibration dudit capteur (8).

19. Sonde optique selon l'une quelconque des revendications 14 à 16 **caractérisé en ce que** les moyens d'émission optique (1) comportent au moins deux émetteurs (1A, 1B, 1C) pour envoyer séquentiellement vers le capteur (8) au moins deux premiers signaux lumineux (2A, 2B, 2C) ayant deux longueurs d'onde différentes pour détecter une couleur ou un changement de couleur dudit capteur, ledit capteur renvoyant au moins deux seconds signaux lumineux (5) en réponse audits deux premiers signaux lumineux.

20. Dispositif de communication comportant une première station (28) et une seconde station (29) reliées par un conduit optique (12) et destinées à émettre et recevoir des informations ou des données par des signaux lumineux (30, 31) circulant dans ledit conduit optique,
**caractérisé en ce que** la première station (28) et la seconde station (29) comportent au moins un dispositif de couplage (14, 14A, 14B) selon l'une quelconque des revendications 1 à 13, un premier signal optique (2, 30) émis par des moyens d'émission d'un premier dispositif de couplage (14A) de la première station (28) étant reçu comme un second signal optique (5) par des moyens de réception (4) d'un second dispositif de couplage (14B) de la seconde station (29), un premier signal optique (2, 31) émis par des moyens d'émission d'un second dispositif de couplage (14B) de la seconde station (29) étant reçu comme un second signal optique (5) par des moyens de réception (4) d'un premier dispositif de couplage (14A) de la première station (28).

21. Dispositif de communication selon la revendication 20 **caractérisé en ce qu'**un premier dispositif de couplage (14A) de la première station (28) comporte un premier filtre optique (32) disposé entre les moyens d'émission et les moyens de réception pour laisser passer un signal optique (31) émis par des moyens d'émission d'un second dispositif de couplage (14B) et atténuer un signal optique ayant une longueur d'onde égale ou très proche de la longueur d'onde d'un signal (31) émis par les moyens d'émission dudit premier dispositif de couplage (14A).

22. Dispositif de communication selon la revendication 21 **caractérisé en ce qu'**un second dispositif de couplage (14B) de la seconde station (29) comporte un second filtre optique (33) disposé entre les moyens d'émission et les moyens de réception pour laisser passer un signal optique (30) émis par des moyens d'émission d'un premier dispositif de couplage (14A) et atténuer un signal optique ayant une longueur d'onde égale ou très proche de la longueur d'onde d'un signal émis par les moyens d'émission dudit second dispositif de couplage (14B).

23. Dispositif de communication selon l'une quelconque des revendications 20 à 22 **caractérisé en ce qu'**au moins un dispositif de couplage (14A, 14B) comporte des moyens de modulation (34, 36) pour moduler dans une première bande de fréquence (BEF1, BEF2) le premier signal lumineux destiné à être émis par les moyens d'émission dudit au moins dispositif de couplage (14A, 14B) et des moyens de détection (35, 37) pour détecter un second signal lumineux pouvant être reçu par les moyens de réception et modulé dans une seconde bande de fréquence (BRF1, BRF2).

24. Dispositif de communication selon l'une quelconque des revendications 20 à 23 **caractérisé en ce que** le conduit optique (12) est une fibre optique reliée entre le premier dispositif de couplage (14A) et le second dispositif de couplage (14B).
